# EUROPEAN PATENT APPLICATION

(11) **EP 4 398 648 A1**
(43) Date of publication of application: **10.07.2024**
(21) Application number: 21955473.0
(22) Date of filing: 01.09.2021
(51) Int. Cl.: H04W 48/20

(54) **CARRIER DETERMINATION METHOD, CARRIER DETERMINATION APPARATUS AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Stöckeler, Ferdinand
(86) International application number: PCT/CN2021/116065
(87) International publication number: WO 2023/028927

(57) **Abstract**

A carrier determination method, a carrier determination apparatus and a storage medium. The carrier determination method, which is applied to a terminal, comprises: determining terminal information of a terminal, and determining a first threshold corresponding to the terminal information; and on the basis of the first threshold, determining a carrier, which is used for initiating data transmission. By means of the method, the number of instances of switching between different carriers may be reduced, thereby reducing an access delay.

## Description

### TECHNICAL FIELD

The disclosure relates to the field of wireless communication technologies, and in particular, to a carrier determining method, a carrier determining apparatus and a storage medium.

### BACKGROUND

At present, with respect to carriers, in addition to carrier pairs corresponding to uplink and downlink carriers, there are also supplementary uplink (SUL) carriers. SUL carriers are generally deployed at low frequencies, and their bandwidths are smaller than that of typical uplink carriers. Their main purpose is to expand uplink coverage. Due to the small path loss of low-frequency carrier, terminals can use Sul carriers at low frequencies to achieve better uplink transmission performance.

However, in the related art, the terminal can only use one uplink carrier at any time. For the terminal that supports SUL carriers, carrier selection is required before initiating random access. In the case of poor air interface quality, the SUL carrier is chosen and used to initiate random access, and in the case of good air interface quality, the uplink carrier is chosen and used to initiate random access. The terminal can determine the uplink carrier used to initiate random access by using the Reference Signal Receiving Power (RSRP) threshold of the SUL carrier. However, in the related art, for newly added terminals with coverage enhancement (CE) capabilities, even if the air interface quality is poor, random access can be initiated using general uplink carriers. Therefore, for the terminal without CE capability, if the appropriate uplink carrier is selected using the same carrier threshold as the terminal with CE capability, to initiate random access, it will not be possible to achieve the function of the terminal with CE capability, reducing the flexibility of scheduling of the base station.

### SUMMARY

In order to overcome problems in the related art, the present disclosure provides a carrier determining method, a carrier determining apparatus and a storage medium.

According to a first aspect of embodiments of the present disclosure, a carrier determining method is provided. The method is applied to a terminal, and the method includes:
determining terminal information of the terminal, and determining a first threshold value corresponding to the terminal information; and determining a carrier for initiating data transmission based on the first threshold value.

In an implementation, different terminal information corresponds to different first threshold values.

In an implementation, determining the first threshold value corresponding to the terminal information includes:
determining a candidate threshold value and/or a first offset value based on a received first indication signaling or communication protocol; determining the candidate threshold value as the first threshold value corresponding to the terminal information, or determining the first threshold value corresponding to the terminal information based on the candidate threshold value and the first offset value, according to the terminal information.

In an implementation, determining the first threshold value corresponding to the terminal information includes:
determining a second threshold value and a second offset value according to a received first indication signaling or communication protocol, wherein the second threshold value is used to determine whether to initiate a retransmission request; and determining the first threshold value corresponding to the terminal information based on the second threshold value and the second offset value, wherein different terminal information corresponds to different second offset values.

In an implementation, the terminal information includes one or more of a terminal type, a terminal function or a terminal channel state.

In an implementation, the terminal type includes a first terminal type or a second terminal type, the first terminal type is a terminal type with coverage enhancement capability, and the second terminal type is a terminal type without coverage enhancement capability; the first threshold value corresponding to the first terminal type is less than the first threshold value corresponding to the second terminal type.

In an implementation, the method further includes:
determining a second threshold value based on a received second indication signaling or communication protocol, wherein the second threshold value is used to determine whether to initiate a retransmission request, wherein different second threshold values correspond to different carriers.

In an implementation, the second indication signaling or communication protocol further includes a third offset value or a fourth offset value;
the second threshold value is determined based on the first threshold value and the third offset value; or the second threshold value is determined based on the first threshold value and the fourth offset value; the third offset value and the fourth offset value correspond to different carriers.

In an implementation, the method further includes:
determining that the second threshold value is greater than or equal to the first threshold value, in response to the second threshold value being corresponding to a primary carrier; or, determining that the second threshold value is less than or equal to the first threshold value, in response to the second threshold value being corresponding to a secondary carrier.

In an implementation, determining the carrier for data transmission based on the first threshold value includes:
determining using a primary carrier to initiate random access, in response to a determined measurement value being greater than or equal to the first threshold value; or determining using a secondary carrier to initiate random access, in response to a determined measurement value being less than or equal to the first threshold value.

In an implementation, the method further includes:
determining a channel measurement value and the carrier for data transmission; initiating a retransmission request based on the carrier, in response to the channel measurement value being less than the second threshold value corresponding to the carrier.

According to a second aspect of embodiments of the present disclosure, a carrier determining method is provided. The method is applied to a network device, and includes:
determining a first threshold value, wherein the first threshold value is used for a terminal to determine a carrier for initiating data transmission according to terminal information; and sending a first indication signaling, the first indication signaling including at least one first threshold value.

In an implementation, there are a plurality of first threshold values;
different first threshold values correspond to different terminal information.

In an implementation, the first indication signaling further includes a first offset value; the first threshold value corresponds to one of different terminal information; the terminal information corresponding to the first offset value is different from the terminal information corresponding to the first threshold value.

In an implementation, the first indication signaling further includes a second threshold value and a second offset value; the second threshold value is used to determine whether to initiate a retransmission request; different second offset values correspond to different terminal information.

In an implementation, the terminal information includes one or more of a terminal type, a terminal function, or a terminal channel state.

In an implementation, the terminal type includes a first terminal type or a second terminal type, the first terminal type is a terminal type with coverage enhancement capability, the second terminal type is a terminal type without coverage enhancement capability; the first threshold value corresponding to the first terminal type is less than the first threshold value corresponding to the second terminal type.

In an implementation, the method further includes:
sending a second indication signaling, wherein the second indication signaling includes a second threshold value, and the second threshold value is used to determine whether to initiate a retransmission request; different second threshold values correspond to differ carriers.

In an implementation, the second indication signaling or communication protocol further includes a third offset value and/or a fourth offset value;
the first threshold value and the third offset value are used for the terminal to determine the second threshold value; or the first threshold value and the fourth offset value are used for the terminal to determine the second threshold value; the third offset value and the fourth offset value correspond to different carriers.

In an implementation, the method further includes:
determining that the second threshold value is greater than or equal to the first threshold value, in response to the second threshold value being corresponding to a primary carrier; or, determining that the second threshold value is less than or equal to the first threshold value, in response to the second threshold value being corresponding to a secondary carrier.

According to a third aspect of embodiments of the present disclosure, a carrier determining apparatus is provided. The apparatus includes:
a determining module, configured to determine terminal information of the terminal, and determine a first threshold value corresponding to the terminal information; and determine a carrier for initiating data transmission based on the first threshold value.

In an implementation, different terminal information corresponds to different first threshold values.

In an implementation, the determining module is configured to:
determine a candidate threshold value and/or a first offset value based on a received first indication signaling or communication protocol; determine the candidate threshold value as the first threshold value corresponding to the terminal information, or determine the first threshold value corresponding to the terminal information based on the candidate threshold value and the first offset value, according to the terminal information.

In an implementation, the apparatus further includes a receiving module;
the receiving module is configured to receive a first indication signaling or communication protocol; the determining module is configured to determine a second threshold value and a second offset value according to the received first indication signaling or communication protocol, wherein the second threshold value is used to determine whether to initiate a retransmission request; and determine the first threshold value corresponding to the terminal information based on the second threshold value and the second offset value, wherein different terminal information corresponds to different second offset values.

In an implementation, the terminal information includes one or more of a terminal type, a terminal function or a terminal channel state.

In an implementation, the terminal type includes a first terminal type or a second terminal type, the first terminal type is a terminal type with coverage enhancement capability, and the second terminal type is a terminal type without coverage enhancement capability; the first threshold value corresponding to the first terminal type is less than the first threshold value corresponding to the second terminal type.

In an implementation, the determining module is further configured to:
determine a second threshold value based on a received second indication signaling or communication protocol, wherein the second threshold value is used to determine whether to initiate a retransmission request, wherein different second threshold values correspond to different carriers.

In an implementation, the second indication signaling or communication protocol further includes a third offset value or a fourth offset value;
the second threshold value is determined based on the first threshold value and the third offset value; or the second threshold value is determined based on the first threshold value and the fourth offset value; the third offset value and the fourth offset value correspond to different carriers.

In an implementation, the determining module is further configured to:
determine that the second threshold value is greater than or equal to the first threshold value, in response to the second threshold value being corresponding to a primary carrier; or, determine that the second threshold value is less than or equal to the first threshold value, in response to the second threshold value being corresponding to a secondary carrier.

In an implementation, the determining module is configured to:
determine using a primary carrier to initiate random access, in response to a determined measurement value being greater than or equal to the first threshold value; or determine using a secondary carrier to initiate random access, in response to a determined measurement value being less than or equal to the first threshold value.

In an implementation, the determining module is further configured to:
determine a channel measurement value and the carrier for data transmission; initiate a retransmission request based on the carrier, in response to the channel measurement value being less than the second threshold value corresponding to the carrier.

According to a fourth aspect of embodiments of the present disclosure, a carrier determining apparatus is provided. The apparatus is applied to a network device, and includes:
a determining module, configured to determine a first threshold value, wherein the first threshold value is used for a terminal to determine a carrier for initiating data transmission according to terminal information; and a sending module, configured to send a first indication signaling, the first indication signaling including at least one first threshold value.

In an implementation, there are a plurality of first threshold values;
different first threshold values correspond to different terminal information.

In an implementation, the first indication signaling further includes a first offset value; the first threshold value corresponds to one of different terminal information; the terminal information corresponding to the first offset value is different from the terminal information corresponding to the first threshold value.

In an implementation, the first indication signaling further includes a second threshold value and a second offset value; the second threshold value is used to determine whether to initiate a retransmission request; different second offset values correspond to different terminal information.

In an implementation, the terminal information includes one or more of a terminal type, a terminal function, or a terminal channel state.

In an implementation, the terminal type includes a first terminal type or a second terminal type, the first terminal type is a terminal type with coverage enhancement capability, the second terminal type is a terminal type without coverage enhancement capability; the first threshold value corresponding to the first terminal type is less than the first threshold value corresponding to the second terminal type.

In an implementation, the sending module is further configured to:
send a second indication signaling, wherein the second indication signaling includes a second threshold value, and the second threshold value is used to determine whether to initiate a retransmission request; different second threshold values correspond to differ carriers.

In an implementation, the second indication signaling or communication protocol further includes a third offset value and/or a fourth offset value;
the first threshold value and the third offset value are used for the terminal to determine the second threshold value; or the first threshold value and the fourth offset value are used for the terminal to determine the second threshold value; the third offset value and the fourth offset value correspond to different carriers.

In an implementation, the determining module is further configured to:
determine that the second threshold value is greater than or equal to the first threshold value, in response to the second threshold value being corresponding to a primary carrier; or, determine that the second threshold value is less than or equal to the first threshold value, in response to the second threshold value being corresponding to a secondary carrier.

According to a fifth aspect of embodiments of the present disclosure, a carrier determining apparatus is provided. The apparatus includes:
a processor; and a memory, configured to store instructions executable by the processor, wherein the processor is configured to implement the carrier determining method described in the first aspect or in any implementation of the first aspect, or implement the carrier determining method described in the second aspect or in any implementation of the second aspect.

According to a sixth aspect of embodiments of the present disclosure, a non-transitory computer readable storage medium is provided. When instructions in the storage medium are executed by a processor of a mobile terminal, the mobile terminal is enabled to implement the carrier determining method described in the first aspect or in any implementation of the first aspect, or the mobile terminal is enabled to implement the carrier determining method described in the second aspect or in any implementation of the second aspect.

The technical solution provided in embodiments of the present disclosure may include the following beneficial effects: the present disclosure determines the first threshold value corresponding to terminal information, and determines the carrier for data transmission based on the corresponding first threshold value, which can reduce the number of times of switching between different carriers and reduce access delay.

It should be understood that the general description above and the detailed description in the following text are only illustrative and explanatory, and cannot limit this disclosure.

### BRIEF DESCRIPTION OF THE DRAWINGS

The accompanying drawings are incorporated into the specification and form a part of this specification, illustrating embodiments in accordance with the present disclosure and used together with the specification to explain the principles of the present disclosure.
Fig. 1 is a schematic diagram of a communication system architecture of network devices and terminals according to an exemplary embodiment.
Fig. 2 is a schematic diagram of a selection of UL carrier and SUL carrier according to an exemplary embodiment.
Fig. 3 is a schematic flowchart of a carrier determining method according to an exemplary embodiment.
Fig. 4 is a schematic flowchart of a carrier determining method according to an exemplary embodiment.
Fig. 5 is a schematic flowchart of a carrier determining method according to an exemplary embodiment.
Fig. 6 is a schematic diagram of different first threshold values in a carrier determining method according to an exemplary embodiment.
Fig. 7 is a schematic diagram of different second threshold values in a carrier determining method according to an exemplary embodiment.
Fig. 8 is a schematic flowchart of a carrier determining method according to an exemplary embodiment.
Fig. 9 is a schematic flowchart of a carrier determining method according to an exemplary embodiment.
Fig. 10 is a schematic flowchart of a carrier determining method according to an exemplary embodiment.
Fig. 11 is a block diagram of a carrier determining apparatus according to an exemplary embodiment.
Fig. 12 is a block diagram of a carrier determining apparatus according to an exemplary embodiment.
Fig. 13 is a block diagram of a device for carrier determining according to an exemplary embodiment.
Fig. 14 is a block diagram of a device for carrier determining according to an exemplary embodiment.

### DETAILED DESCRIPTION

Here, a detailed explanation of exemplary embodiments will be provided, which are illustrated in the accompanying drawings. When the following description involves drawings, unless otherwise indicated, the same numbers in different drawings represent the same or similar elements. The embodiments described in the following exemplary embodiments do not represent all embodiments consistent with the present disclosure. On the contrary, they are only examples of apparatuses and methods consistent with some aspects of the present disclosure as detailed in the attached claims.

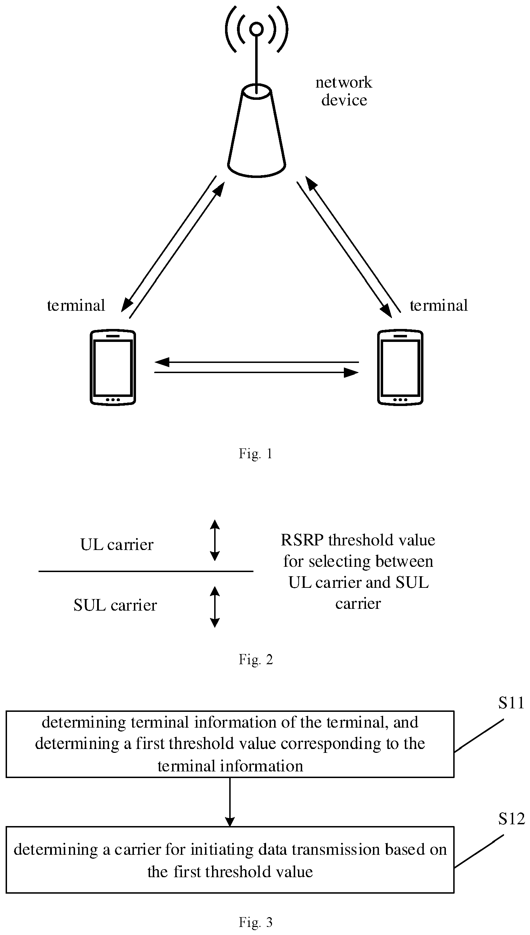

Fig. 1 is a schematic diagram of a communication system architecture of network devices and terminals according to an exemplary embodiment of the present disclosure. The communication method provided in this disclosure can be applied to the communication system architecture shown in Fig. 1. As shown in Fig. 1, network side devices can send signaling based on the architecture shown in Fig. 1.

It can be understood that the communication system of the network devices and the terminals shown in Fig. 1 is only for illustrative purposes, and the wireless communication system may also include other network devices, such as core network devices, wireless relay devices, and wireless backhaul devices, which are not shown in Fig. 1. Embodiments of the present disclosure do not limit the number of network devices and terminals included in the wireless communication system.

It can be further understood that the wireless communication system of embodiments of the present disclosure is a network that provides wireless communication functions. Wireless communication systems can adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency Division Multiple Access (OFDMA), Single Carrier FDMA (SC-FDMA), Carrier Sense Multiple Access with Collision Avoidance. According to factors such as capacity, speed, and latency of different networks, they can be divided into 2G (generation) networks, 3G networks, 4G networks, or future evolution networks, such as 5G networks, which can also be referred to as New Radio (NR). For the convenience of description, wireless communication networks are sometimes referred to as networks in this disclosure.

Further, the network devices referred to in this disclosure can also be referred to as wireless access network devices. The wireless access network device may be base station, evolved node B (base station), home base station, access point (AP) in wireless fidelity (WIFI) system, wireless relay node, wireless backhaul node, transmission point (TP) or transmission and reception point (TRP), etc; or may also be gNB in NR system, or may also be a component or part of the equipment that makes up the base station. When using the V2X communication system, the network device may also be an onboard device. It should be understood that in embodiments of the present disclosure, there is no limitation on the specific technology and device form adopted by the network device.

Further, the terminals referred to in this disclosure can also be referred to as terminal devices, user equipment (UE), mobile stations (MS), mobile terminals (MT), etc., which are devices that provide voice and/or data connectivity to users. For example, the terminals may be handheld devices with wireless connectivity, vehicle devices, etc. At present, some examples of terminals include: mobile phones, Pocket Personal Computers (PPC), handheld computers, Personal Digital Assistants (PDAs), laptops, tablets, wearable devices, or in car devices, etc. In addition, when used as a vehicle to vehicle (V2X) communication system, the terminal device can also be a vehicle device. It should be understood that embodiments of the present disclosure do not limit the specific technology and device form used by the terminal.

In the new generation of communication technology (such as NR), in addition to a carrier pair corresponding to uplink and downlink carriers, there is also an SUL for the carrier, which can also be referred to as a supplementary uplink carrier. SUL is generally deployed in low frequencies, for example, if a carrier operates in the 3.5GHz frequency band, it will be provided with an 800MHz supplementary uplink carrier. The main purpose of configuring SUR is to expand uplink coverage. The performance of uplink transmission in power limited areas such as cell edges is improved by using low-frequency carriers. The uplink bandwidth of the UL carrier (i.e., the general carrier) included in the carrier pair is larger than the uplink bandwidth of the SUL. Therefore, in cases where the air interface quality is good, such as when the terminal is very close to the wireless access network device (base station), the terminal can use UL carriers to achieve higher rates. When the quality of the air interface becomes poor, due to the small path loss of the low-frequency carrier, the terminal can use the SUL uplink carrier at low frequencies to achieve better uplink transmission performance. In the related art, the terminal can use only one uplink carrier at any time.

For the terminal that supports SUR, before initiating random access, the terminal needs to select between UL carrier and SUR carrier. The terminal can determine the carrier used to initiate random access according to the RSRP threshold value (RSRP-thresholdSSB-SUL) for selecting between the UL carrier and the SUL carrier. Fig. 2 is a schematic diagram of a selection of UL carrier and SUR carrier according to an exemplary embodiment. As shown in Fig. 2, when the synchronization signal reference signal received power (SS-RSRP) measured by the terminal is less than the threshold RSRP-thresholdSSB-SUL, the terminal will use the SUL carrier to initiate random access; when the SS-RSRP measured by the terminal is greater than the threshold RSRP-thresholdSSB-SUL, the terminal will use UL carrier to initiate random access. In other words, when the coverage conditions are poor, the transmission of the uplink channel during the random access process will be enhanced by using SUR carriers.

In the standard (Rel-17) discussion, some terminals have CE capability, and blind retransmission can be used to improve the performance of the uplink transmission of msg3 during random access, and the uplink coverage of CE terminals is stronger. At this point, if UL supports CE, CE terminals can still choose to remain on UL to initiate random access even at the edge of poorly covered cells. However, for terminals without CE capability, if the appropriate uplink carrier is selected to initiate random access using the same carrier threshold value as the terminal with CE capability, it may result in unsuccessful random access due to poor signal quality.

This disclosure provides a carrier determining method, which achieves load balancing between different carriers by configuring different RSRP threshold values for CE terminals and non-CE terminals, while reducing switching between different carriers and reducing access delay, making the configuration of RSRP threshold values more flexible.

The following embodiments will explain the configuration of RSRP threshold values in conjunction with the accompanying drawings.

Fig. 3 is a schematic flowchart of a carrier determining method according to an exemplary embodiment. As shown in Fig. 3, the carrier determining method is applied in a terminal, and includes following steps.

In step S11, terminal information of the terminal is determined, and a first threshold value corresponding to the terminal information is determined.

In step S12, a carrier for data transmission is determined based on the first threshold value.

In embodiments of the present disclosure, terminal information may be one or more of terminal type, terminal function, or terminal channel state. The first threshold value may be the threshold value for Signal to Interference Plus Noise Ratio (SINR), Signal to Noise Ratio (SNR), RSRP, Reference Signal Receiving Quality (RSRQ), or channel quality measurement value. The carrier used for data transmission may be the carrier used to initiate random access.

The terminal determines the first threshold value corresponding to its terminal information based on its own terminal information. For example, if the terminal information includes the type of terminal, the type of terminal may be either a coverage enhanced terminal or a non coverage enhanced terminal. The terminal selects the carrier used for data transmission based on the corresponding first threshold value.

With the carrier determining method provided in embodiments of the present disclosure, the terminal can determine the carrier used for data transmission based on its own terminal information. This can reduce the switching between different carriers and lower the access delay.

In embodiments of the present disclosure, in response to the terminal information being the terminal type, taking two types of terminals as an example, the first threshold value corresponding to the terminal type can be determined using the following implementation.

In an implementation, the network device can configure different first threshold values for different terminal types. The terminal can determine the first threshold value corresponding to its type in two different first threshold values based on its own type. The terminal compares the SS-RSRP obtained from measuring the Synchronization Signal and PBCH block (SSB) with its corresponding first threshold value, and determines the carrier used for data transmission in the UL carrier and Sul carrier. The terminal can also measure the Channel State Information-Reference Signal (CSI-RS) to obtain the channel state measurement value. Based on comparing the channel state measurement value with the first threshold value, the carrier used for data transmission is determined in the UL carrier and SUL carrier.

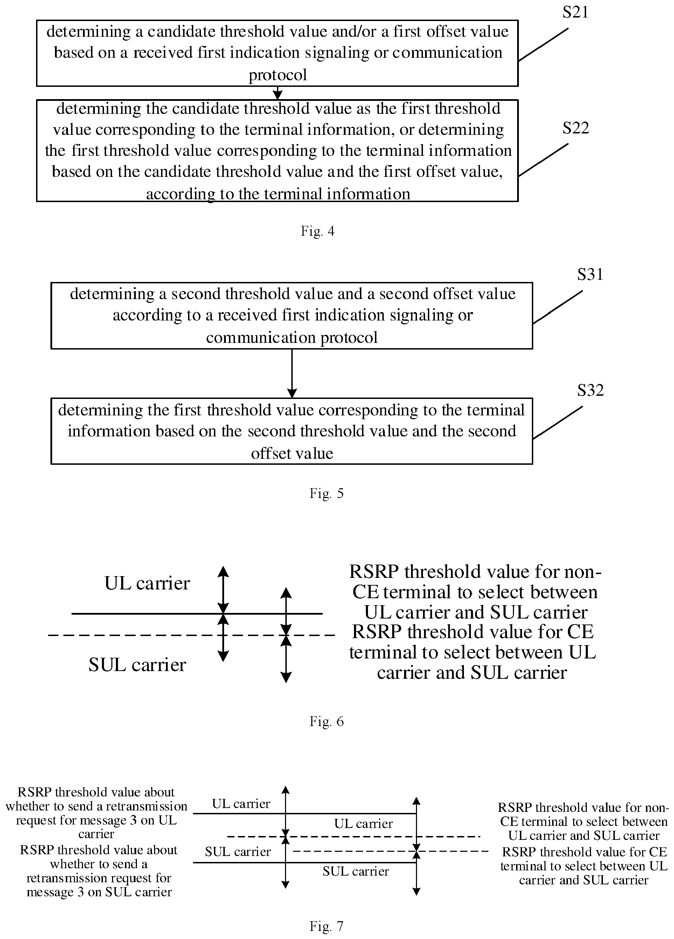

In another implementation, the network device can configure a candidate threshold value for different terminal types and configure an offset value, which is referred to as a first offset value for ease of differentiation. The terminal determines its corresponding first threshold value, which can be implemented using the steps shown in Fig. 4.

Fig. 4 is a schematic flowchart of a carrier determining method according to an exemplary embodiment. As shown in Fig. 4, the carrier determining method is applied in a terminal, and includes following steps.

In step S21, a candidate threshold value and/or a first offset value is determined based on a received first indication signaling or communication protocol.

In embodiments of the present disclosure, the terminal receives the first indication signal or communication protocol sent by the network device, and determines the first threshold value and/or the first offset value based on the first indication signal or communication protocol. The first indication signaling may be Master Information Block (MIB), Remaining Minimum System Information (RMSI), Other System Information (OSI), Radio Resource Control (RRC) signaling, Downlink Control Information, Media Access Control (MAC CE) signaling. For example, the communication protocol specifies that the first threshold value may be a fixed value, or the network device indicates the first threshold value semi-statically or dynamically through the first indication signaling.

In step S22, the candidate threshold value is determined as the first threshold value corresponding to the terminal information, or the first threshold value corresponding to the terminal information is determined based on the candidate threshold value and the first offset value, according to the terminal information.

In embodiments of the present disclosure, the candidate threshold value can correspond to any terminal information. After determining its own terminal information, the terminal determines the terminal information corresponding to the candidate threshold value. If the candidate threshold value corresponds to the terminal information of the terminal, then the candidate threshold value is determined as the first threshold value. If the terminal information corresponding to the candidate threshold value is different from the terminal information of the terminal, the first threshold value corresponding to the terminal information is determined based on the candidate threshold value and the first offset value.

In an implementation, the terminal information includes the terminal type, which includes a first terminal type and a second terminal type. The terminal of the first terminal type may be a terminal without coverage enhancement capability, and the terminal of the second terminal type may be a terminal with coverage enhancement capability. For example, if the candidate threshold value corresponds to a terminal without coverage enhancement capability, the terminal without coverage enhancement capability determines the candidate threshold value as the corresponding first threshold value, and the terminal with coverage enhancement capability determines the corresponding first threshold value based on the candidate threshold value and the first offset value. For another example, if the candidate threshold value corresponds to a terminal with coverage enhancement capability, the terminal with coverage enhancement capability determines the candidate threshold value as the corresponding first threshold value, while the terminal without coverage enhancement capability determines the corresponding first threshold value based on the candidate threshold value and the first offset value.

For example, the network device configures the first threshold value for the terminal without coverage enhancement capability through signaling instructions or communication protocols. In response to the fact that the terminal does not have coverage enhancement capability, the carrier used for data transmission is selected based on the first threshold value between UL carrier and SUR carrier. In response to the fact that the terminal is a terminal with coverage enhancement capability, the terminal can obtain the first offset value through the configuration signaling of the network device, and determine the first threshold value corresponding to the terminal with coverage enhancement capability by calculating the first threshold value and the first offset value. For example, the first threshold value for selecting between the UL carrier and the SUL carrier for the CE terminal can be determined based on the difference between the threshold value for selecting between the UL carrier and the SUL carrier for the non-CE terminal and the first offset value. (rsrp_thresholdSSB-SUL for CE UE=rsrp-ThresholdSSB-SUL for non CE UE offset). The terminal compares the measured SS-RSRP with the first threshold value corresponding to its own type, and determines the carrier used for data transmission in UL carrier and SUR carrier.

In some other embodiments of the present disclosure, the coverage enhancement terminal may also determine whether to initiate a retransmission request within the carrier for data transmission after determining the carrier used for data transmission, in order to perform coverage enhancement. The coverage enhancement terminal can determine whether to initiate a retransmission request in the carrier based on the second threshold value. Further, with respect to determining the first threshold value based on the second threshold value, reference can be made to the implementation steps in Fig. 5.

Fig. 5 is a schematic flowchart of a carrier determining method according to an exemplary embodiment. As shown in Fig. 5, the carrier determining method is applied in a terminal, and includes following steps.

In step S31, a second threshold value and a second offset value are determined based on a received first indication signaling or communication protocol.

The second threshold value is used to determine whether to initiate a retransmission request. The retransmission request may be a blind retransmission request for message 3 (msg3).

In step S32, the first threshold value corresponding to the terminal information is determined based on the second threshold value and the second offset value.

In embodiments of the present disclosure, if the network device configures the second threshold value for terminals and configures different offset values for different terminal types, the terminal can determine the corresponding first threshold value based on the second threshold value and the offset value. The offset value may be specified by the protocol or dynamically indicated by the network device, without specific limitations.

For example, if the network device configures second threshold values for UL carrier and SUR carrier respectively, taking the second threshold value configured for one of the carriers as an example, if the terminal information includes the terminal type, the terminal determines the second threshold value and determines the offset value corresponding to the terminal type, and determines the first threshold value for the terminal of the corresponding type to select the carrier for data transmission based on the corresponding offset value. Of course, in this disclosure, the configured offset value may also be other parameters related to the second threshold value, which will not be elaborated here.

In some embodiments of the present disclosure, the terminal information includes the first terminal type and the second terminal type. The first terminal type is a terminal type with coverage enhancement capability, and the second terminal type is a terminal type without coverage enhancement capability. As shown in Fig. 6, the first threshold value corresponding to the first terminal type is smaller than the first threshold value corresponding to the second terminal type. Fig. 6 is a schematic diagram of different first threshold values in a carrier determining method according to an exemplary embodiment.

In embodiments of the present disclosure, the terminal transmits data based on the determined carrier, and may further determine whether to initiate a retransmission request based on the second threshold value. Fig. 7 is a schematic diagram of different second threshold values in a carrier determining method according to an exemplary embodiment. As shown in Fig. 7, the terminal determines the second threshold value based on the received second indication signaling or communication protocol. Different second threshold values correspond to different carriers. The second threshold value is used to determine whether to initiate a retransmission request.

For example, if the SS-RSRP value measured by the coverage enhancement terminal is greater than the first threshold value corresponding to the coverage enhancement terminal and less than the first threshold value corresponding to the non coverage enhancement terminal (i.e., the terminal that does not support coverage enhancement capability), the CE terminal initiates a blind retransmission request for msg3.

For another example, if the SS-RSRP value measured by the coverage enhancement terminal is less than the second threshold value of the SUL carrier, the coverage enhancement terminal initiates a blind retransmission request for msg3 on the SUL carrier. Alternatively, if the SS-RSRP value measured by the coverage enhancement terminal is greater than the first threshold value for carrier selection corresponding to the coverage enhancement terminal and less than the second threshold value of the UL carrier, the coverage enhancement terminal initiates a blind retransmission request for msg.3 on the UL carrier.

The following embodiments will explain the determination of the second threshold value.

In some embodiments of the present disclosure, the terminal determines the second threshold value based on the second indication signaling received, or determines the second threshold value based on the communication protocol. The second threshold value is used to determine whether to initiate a retransmission request. Different second threshold values correspond to different carriers.

In embodiments of the present disclosure, the second indication signaling may be a system message (MIB), RMSI, OSI, RRC, MAC CE, downlink control information (DCI), or other signaling.

In other embodiments of the present disclosure, the second indication signaling or communication protocol further includes a third offset value or a fourth offset value. The second threshold value is determined based on the first threshold value and the third offset value. Alternatively, the second threshold value is determined based on the first threshold value and the fourth offset value. The third and fourth offset values correspond to different carriers. For example, the third offset value corresponds to the UL carrier, and the fourth offset value corresponds to the SUL carrier.

For example, if the network device configures a third offset value relative to the UL carrier for the terminal, the terminal can determine the second threshold value of the UL carrier based on the third offset value and the first threshold value of the coverage enhanced terminal or non coverage enhanced terminal. Alternatively, the network device can configure a relevant parameter relative to the first threshold value of the coverage enhancement terminal. The terminal determines the third offset value based on this parameter and the base point, and then determines the second threshold value based on the first threshold value of the coverage enhancement terminal or non coverage enhancement terminal, as well as the third offset value. This second threshold value is used for the coverage enhancement terminal to determine whether to initiate the retransmission request for msg3.

In another embodiment, the second threshold value for initiating a blind retransmission request for msg.3 on the SUR carrier is determined based on the second threshold value for a blind retransmission request for msg.3 on the UL carrier and corresponding offset value.

In yet another embodiment, the second threshold value for initiating a blind retransmission request for msg.3 on the UL carrier is determined based on the second threshold value for the blind retransmission request for msg.3 on the SUL carrier and the corresponding offset value.

In some embodiments of the present disclosure, if the second threshold value is the threshold value for the terminal to determine whether to initiate a retransmission request for msg3 on the primary carrier (UL), and the terminal information includes the terminal type, then the second threshold value is greater than or equal to the first threshold value corresponding to the first terminal type (i.e., coverage enhancement terminal), and the second threshold value is greater than or equal to the first threshold value corresponding to the second terminal type (i.e., non coverage enhancement terminal).

If the second threshold value is the threshold value for the terminal to determine whether to initiate the msg3 retransmission request on the secondary carrier (SUL), the second threshold value is less than or equal to the first threshold value corresponding to the first terminal type.

In embodiments of the present disclosure, if the SS-RSRP measurement value determined by the terminal is greater than or equal to the first threshold value, it is determined to use the primary carrier for data transmission. If the SS-RSRP measurement value determined by the terminal is less than or equal to the threshold value, it is determined to use the secondary carrier for data transmission.

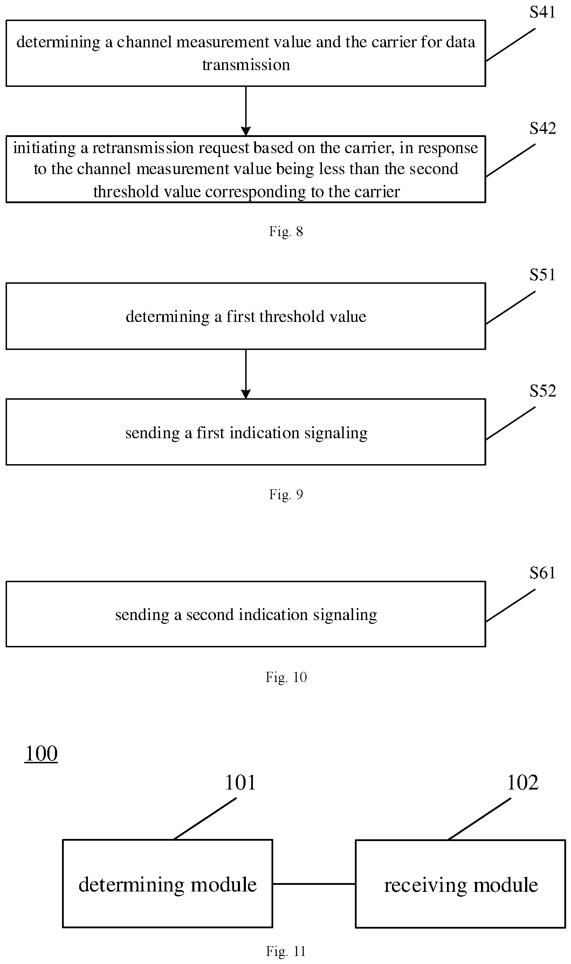

In embodiments of the present disclosure, the terminal determines whether to initiate a retransmission request for msg3 by comparing the obtained SS-RSRP measurement value with the second threshold value. Please refer to the implementation steps shown in Fig. 8.

Fig. 8 is a schematic flowchart of a carrier determining method according to an exemplary embodiment. As shown in Fig. 8, the carrier determining method is applied in a terminal, and includes following steps.

In step S41, a channel measurement value and the carrier for data transmission are determined.

In step S42, the retransmission request is initiated based on the corresponding carrier, in response to the channel measurement value being less than the second threshold value corresponding to the carrier.

In some embodiments of the present disclosure, the terminal compares the SS-RSRP measurement value with the first threshold value, determines the carrier used for data transmission, and further compares the SS - RSRP measurement value with the second threshold value to determine whether to initiate a retransmission request for msg3 on that carrier. If the SS-RSRP measurement value is less than the second threshold value corresponding to the carrier, a retransmission request for msg3 is initiated based on the carrier.

Based on the same/similar concept, embodiments of the present disclosure also provide a carrier determining method.

Fig. 9 is a schematic flowchart of a carrier determining method according to an exemplary embodiment. As shown in Fig. 9, the carrier determining method is applied in a network device, and includes the following steps.

In step S51, a first threshold value is determined.

The first threshold value is used for a terminal to determine a carrier for data transmission according to terminal information.

In step S52, a first indication signaling is sent.

In embodiments of the present disclosure, the first indication signaling includes at least one first threshold value.

In embodiments of the present disclosure, the network device sends the first indication signaling or communication protocol, where the first indication signaling may be RMSI, OSI, SINR, SNR, RRC, RSRQ signaling, etc. For example, the first threshold value determined by the communication protocol may be a fixed value, and the first threshold value indicated by the first indication signaling may be dynamically determined by the network device. The carrier used for data transmission may be the carrier used for data transmission.

In embodiments of the present disclosure, terminal information may be one or more of terminal type, terminal function, or terminal channel state. The first threshold value may be the threshold value of SNR, RSRP, RSRQ, channel quality measurement value, etc. The carrier used for data transmission may be the carrier used for data transmission.

The terminal determines the first threshold value corresponding to its terminal information based on its own terminal information. For example, if the terminal information includes the type of the terminal, the type of terminal may be either a coverage enhancement terminal or a non coverage enhancement terminal. The terminal selects the carrier used for data transmission based on the corresponding first threshold value.

With the carrier determining method provided in embodiments of the present disclosure, the terminal can determine the carrier used for decision data transmission based on its own terminal information. This can reduce the switching between different carriers and lower the access delay.

In embodiments of the present disclosure, in response to the terminal information being the terminal type, taking two types of terminals as an example, the first threshold value corresponding to the terminal type can be determined using the following implementation.

In an implementation, the network device can configure different first threshold values for different terminal types. The terminal can determine the first threshold value corresponding to its type in two different first threshold values based on its own type. The terminal compares the SS-RSRP obtained from measuring the SSB with its corresponding first threshold value, and determines the carrier used for data transmission in the UL carrier and Sul carrier. The terminal can also measure the CSI-RS to obtain the channel state measurement value, and determine the carrier used for data transmission in the UL carrier and SUL carrier based on comparing the channel state measurement value with the first threshold value.

With the carrier determining method provided in embodiments of the present disclosure, the terminal can determine the carrier used for decision data transmission based on its own terminal information. This can reduce the switching between different carriers and lower the access delay.

In embodiments of the present disclosure, in response to the terminal information being the terminal type, taking two types of terminals as an example, the first threshold value corresponding to the terminal type can be determined using the following implementation.

In an implementation, the network device can configure different first threshold values for different terminal types. The terminal can determine the first threshold value corresponding to its type in two different first threshold values based on its own type. The terminal compares the SS-RSRP obtained from measuring the SSB with its corresponding first threshold value, and determines the carrier used for data transmission in the UL carrier and Sul carrier. The terminal can also measure the CSI-RS to obtain the channel state measurement value, and determine the carrier used for data transmission in the UL carrier and SUL carrier based on comparing the channel state measurement value with the first threshold value.

In another implementation, the network device can configure a candidate threshold value for different terminal information and configure an offset value, which is referred to as a first offset value for ease of differentiation.

In embodiments of the present disclosure, the candidate threshold value can correspond to any terminal information. After determining its own terminal information, the terminal determines the terminal information corresponding to the candidate threshold value. If the candidate threshold value corresponds to the terminal information of the terminal, then the candidate threshold value is determined as the first threshold value. If the terminal information corresponding to the candidate threshold value is different from the terminal information of the terminal, the first threshold value corresponding to the terminal information is determined based on the candidate threshold value and the first offset value.

In an implementation, the terminal information includes the terminal type, which includes a first terminal type and a second terminal type. The terminal of the first terminal type may be a terminal without coverage enhancement capability, and the terminal of the second terminal type may be a terminal with coverage enhancement capability. For example, if the candidate threshold value corresponds to a terminal without coverage enhancement capability, the terminal without coverage enhancement capability determines the candidate threshold value as the corresponding first threshold value, and the terminal with coverage enhancement capability determines the corresponding first threshold value based on the candidate threshold value and the first offset value. For another example, if the candidate threshold value corresponds to a terminal with coverage enhancement capability, the terminal with coverage enhancement capability determines the candidate threshold value as the corresponding first threshold value, while the terminal without coverage enhancement capability determines the corresponding first threshold value based on the candidate threshold value and the first offset value.

For example, the network device configures the first threshold value for the terminal without coverage enhancement capability through signaling instructions or communication protocols. In response to the fact that the terminal does not have coverage enhancement capability, the carrier used for data transmission is selected based on the first threshold value between UL carrier and SUR carrier. In response to the fact that the terminal is a terminal with coverage enhancement capability, the terminal can obtain the first offset value through the configuration signaling of the network device, and determine the first threshold value corresponding to the terminal with coverage enhancement capability by calculating the first threshold value and the first offset value. For example, the first threshold value for selecting between the UL carrier and the SUL carrier for the CE terminal can be determined based on the difference between the threshold value for selecting between the UL carrier and the SUL carrier for the non-CE terminal and the first offset value. (rsrp_thresholdSSB-SUL for CE UE=rsrp-ThresholdSSB-SUL for non CE UE offset). The terminal compares the measured SS-RSRP with the first threshold value corresponding to its own type, and determines the carrier used for data transmission in UL carrier and SUR carrier.

In embodiments of the present disclosure, the network device may also configure a second threshold value for coverage enhancement terminals, and configure different offset values for different terminal types. The second threshold value is used by the terminal to determine whether to initiate a retransmission request for coverage enhancement. The offset value may be determined based on a certain base point and related parameters of the first threshold value, or may be dynamically indicated by the network device, which is specifically limited here.

For example, if the network device configures second threshold values for UL carrier and SUR carrier respectively, take the second threshold value configured for one of the carriers as an example. The terminal determines the second threshold value and determines the offset value corresponding to the terminal information, and determines the first threshold value for the terminal to select the carrier for data transmission based on the corresponding offset value. Of course, in this disclosure, the configured offset value may also be other parameters related to the second threshold value, which will not be elaborated here.

In some embodiments disclosed herein, the terminal type includes a first terminal type and a second terminal type. The first terminal type is a terminal type with coverage enhancement capability, and the second terminal type is a terminal type without coverage enhancement capability. The first threshold value corresponding to the first terminal type is smaller than the first threshold value corresponding to the second terminal type.

In embodiments of the present disclosure, the terminal transmits data based on the determined carrier, and may further determine whether to initiate a retransmission request based on the second threshold value. The terminal determines the second threshold value based on the received second indication signaling or communication protocol. Different second threshold values correspond to different carriers. The second threshold value is used to determine whether to initiate a retransmission request.

For example, if the SS-RSRP value measured by the terminal is greater than the first threshold value corresponding to the coverage enhancement terminal and less than the first threshold value corresponding to the non coverage enhancement terminal (i.e., the terminal that does not support coverage enhancement capability), the SS-RSRP value is compared with the second threshold value, to determine whether to initiate a blind retransmission request for msg3.

For another example, if the SS-RSRP value measured by the coverage enhancement terminal is less than the second threshold value of the SUL carrier, the coverage enhancement terminal initiates a blind retransmission request for msg3 on the SUL carrier. Alternatively, if the SS-RSRP value measured by the coverage enhancement terminal is greater than the first threshold value for carrier selection corresponding to the coverage enhancement terminal and less than the second threshold value of the UL carrier, the coverage enhancement terminal initiates a blind retransmission request for msg.3 on the UL carrier.

The following embodiments will explain the determination of the second threshold value.

Fig. 10 is a schematic flowchart of a carrier determining method according to an exemplary embodiment. As shown in Fig. 10, the carrier determining method is applied in a network device, and includes following steps.

In step S61, a second indication signaling is sent.

The second indication signaling includes the second threshold value. The second threshold value is used to determine whether to initiate the retransmission request. The second indication signaling may be a MIB, RMSI, OSI, RRC, MAC CE, DCI signaling, etc.

In some embodiments of the present disclosure, the network device may configure different second threshold values for different carriers of the terminal.

In other embodiments of the present disclosure, the second indication signaling or communication protocol further includes a third offset value or a fourth offset value. The second threshold value is determined based on the first threshold value and the third offset value. Alternatively, the second threshold value is determined based on the first threshold value and the fourth offset value. The third and fourth offset values correspond to different carriers. For example, the third offset value corresponds to the first terminal type, and the second threshold value can be determined based on the first threshold value corresponding to the first terminal type; or, the fourth offset value corresponds to the second terminal type, and the second threshold value can be determined based on the first threshold value corresponding to the second terminal type.

For example, if the network device configures a third offset value relative to the UL carrier for the terminal, the terminal can determine the second threshold value of the UL carrier based on the third offset value and the first threshold value of the coverage enhanced terminal or non coverage enhanced terminal. Alternatively, the network device can configure a relevant parameter relative to the first threshold value of the coverage enhancement terminal. The terminal determines the third offset value based on this parameter and the base point, and then determines the second threshold value based on the first threshold value of the coverage enhancement terminal or non coverage enhancement terminal, as well as the third offset value. This second threshold value is used for the terminal to determine whether to initiate the retransmission request for msg3.

In some embodiments of the present disclosure, if the second threshold value is the threshold value for the terminal to determine whether to initiate a retransmission request for msg3 on the primary carrier (UL), and the terminal information includes the terminal type, then the second threshold value is greater than or equal to the first threshold value corresponding to the first terminal type (i.e., coverage enhancement terminal), and the second threshold value is greater than or equal to the first threshold value corresponding to the second terminal type (i.e., non coverage enhancement terminal).

If the second threshold value is the threshold value for the terminal to determine whether to initiate the msg3 retransmission request on the secondary carrier (SUL), the second threshold value is less than or equal to the first threshold value corresponding to the first terminal type.

In embodiments of the present disclosure, if the SS-RSRP measurement value determined by the terminal is greater than or equal to the first threshold value, it is determined to use the primary carrier for data transmission. If the SS-RSRP measurement value determined by the terminal is less than or equal to the threshold value, it is determined to use the secondary carrier for data transmission.

In embodiments of the present disclosure, the terminal determines whether to initiate a retransmission request for msg3 by comparing the obtained SS-RSRP measurement value with the second threshold value.

For example, the terminal compares the SS-RSRP measurement value with the first threshold value, determines the carrier used for data transmission, and further compares the SS -RSRP measurement value with the second threshold value to determine whether to initiate a retransmission request for msg3 on that carrier. If the SS-RSRP measurement value is less than the second threshold value corresponding to the carrier, a retransmission request for msg3 is initiated based on the carrier.

Based on the same concept, embodiments of the present disclosure further provide a carrier determining apparatus.

It can be understood that the carrier determining apparatus provided in embodiments of the present disclosure includes hardware structures and/or software modules corresponding to the execution of respective functions, in order to achieve the above functions. In combination with the units and algorithm steps of each example disclosed in embodiments of the present disclosure, embodiments of the present disclosure can be implemented in the form of hardware or a combination of hardware and computer software. Whether a certain function is executed in hardware or computer software driven hardware depends on the specific application and design constraints of the technical solution. Technicians in this field may use different methods to achieve the described functions for each specific application, but such implementation should not be considered beyond the scope of the technical solution of embodiments of the present disclosure.

Fig. 11 is a block diagram of a carrier determining apparatus according to an exemplary embodiment of the present disclosure. Referring to Fig. 11, the carrier determining apparatus 100 is applied in a terminal, and includes a determining module 101.

The determining module 101 is configured to determine terminal information of the terminal, and determine a first threshold value corresponding to the terminal information; and determine a carrier for initiating data transmission based on the first threshold value.

In embodiments of the present disclosure, different terminal information corresponds to different first threshold values.

In embodiments of the present disclosure, the determining module 101 is configured to determine a candidate threshold value and/or a first offset value based on a received first indication signaling or communication protocol; determine the candidate threshold value as the first threshold value corresponding to the terminal information, or determine the first threshold value corresponding to the terminal information based on the candidate threshold value and the first offset value, according to the terminal information.

In embodiments of the present disclosure, the apparatus further includes a receiving module 102.

The receiving module 102 is configured to receive a first indication signaling or communication protocol. The determining module is configured to determine a second threshold value and a second offset value according to the received first indication signaling or communication protocol, wherein the second threshold value is used to determine whether to initiate a retransmission request; and determine the first threshold value corresponding to the terminal information based on the second threshold value and the second offset value, wherein different terminal information corresponds to different second offset values.

In embodiments of the present disclosure, the terminal information includes one or more of a terminal type, a terminal function or a terminal channel state.

In embodiments of the present disclosure, the terminal type includes a first terminal type or a second terminal type, the first terminal type is a terminal type with coverage enhancement capability, and the second terminal type is a terminal type without coverage enhancement capability. The first threshold value corresponding to the first terminal type is less than the first threshold value corresponding to the second terminal type.

In embodiments of the present disclosure, the determining module 101 is further configured to determine a second threshold value based on a received second indication signaling or communication protocol, wherein the second threshold value is used to determine whether to initiate a retransmission request. Different second threshold values correspond to different carriers.

In embodiments of the present disclosure, the second indication signaling or communication protocol further includes a third offset value or a fourth offset value.

The second threshold value is determined based on the first threshold value and the third offset value; or the second threshold value is determined based on the first threshold value and the fourth offset value. The third offset value and the fourth offset value correspond to different carriers.

In embodiments of the present disclosure, the determining module 101 is further configured to determine that the second threshold value is greater than or equal to the first threshold value, in response to the second threshold value being corresponding to a primary carrier; or, determine that the second threshold value is less than or equal to the first threshold value, in response to the second threshold value being corresponding to a secondary carrier.

In embodiments of the present disclosure, the determining module 101 is configured to: determine using a primary carrier to initiate random access, in response to a determined measurement value being greater than or equal to the first threshold value; or determine using a secondary carrier to initiate random access, in response to a determined measurement value being less than or equal to the first threshold value.

In embodiments of the present disclosure, the determining module 101 is further configured to determine a channel measurement value and the carrier for data transmission; initiate a retransmission request based on the carrier, in response to the channel measurement value being less than the second threshold value corresponding to the carrier.

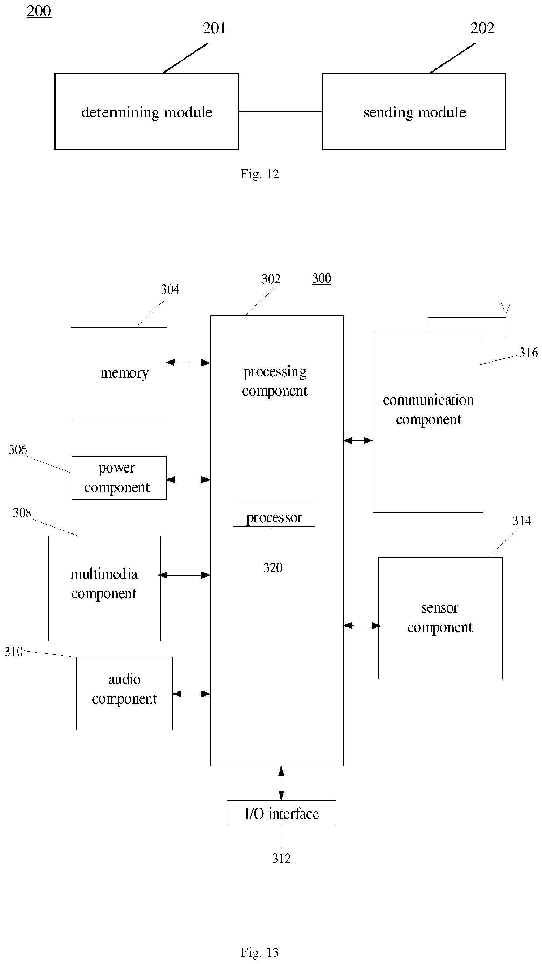

Fig. 12 is a block diagram of a carrier determining apparatus according to an exemplary embodiment. Referring to Fig. 12, the carrier determining apparatus 200 is applied in a network device, and includes a determining module 201 and a sending module 202.

The determining module 201 is configured to determine a first threshold value, wherein the first threshold value is used for a terminal to determine a carrier for initiating data transmission according to terminal information. The sending module 202 is configured to send a first indication signaling, the first indication signaling including at least one first threshold value.

In embodiments of the present disclosure, there are a plurality of first threshold values.

Different first threshold values correspond to different terminal information.

In embodiments of the present disclosure, the first indication signaling further includes a first offset value. The first threshold value corresponds to one of different terminal information. The terminal information corresponding to the first offset value is different from the terminal information corresponding to the first threshold value.

In embodiments of the present disclosure, the first indication signaling further includes a second threshold value and a second offset value. The second threshold value is used to determine whether to initiate a retransmission request. Different second offset values correspond to different terminal information.

In embodiments of the present disclosure, the terminal information includes one or more of a terminal type, a terminal function, or a terminal channel state.

In embodiments of the present disclosure, the terminal type includes a first terminal type or a second terminal type, the first terminal type is a terminal type with coverage enhancement capability, the second terminal type is a terminal type without coverage enhancement capability. The first threshold value corresponding to the first terminal type is less than the first threshold value corresponding to the second terminal type.

In embodiments of the present disclosure, the sending module 202 is further configured to send a second indication signaling, wherein the second indication signaling includes a second threshold value. The second threshold value is used to determine whether to initiate a retransmission request. Different second threshold values correspond to differ carriers.

In embodiments of the present disclosure, the second indication signaling or communication protocol further includes a third offset value and/or a fourth offset value.

The first threshold value and the third offset value are used for the terminal to determine the second threshold value; or the first threshold value and the fourth offset value are used for the terminal to determine the second threshold value. The third offset value and the fourth offset value correspond to different carriers.

In embodiments of the present disclosure, the determining module 201 is further configured to determine that the second threshold value is greater than or equal to the first threshold value, in response to the second threshold value being corresponding to a primary carrier; or, determine that the second threshold value is less than or equal to the first threshold value, in response to the second threshold value being corresponding to a secondary carrier.

Regarding the apparatus in the above embodiments, the specific ways in which each module performs operations have been described in detail in the embodiments related to the method, and will not be elaborated here.

Fig. 13 is a block diagram of a device 300 for carrier determining according to an exemplary embodiment. For example, the device 300 may be a smartphone, a computer, a digital broadcasting terminal, a massage transmitter/receiver, a tablet device, a game console, a medical device, a fitness device, a personal digital assistant, etc.

Referring to Fig. 13, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. When the device 300 is in an operation mode, such as a shooting mode or a video mode, the front camera and/or the rear camera can receive external multimedia data. Each front camera and rear camera can be a fixed optical lens system or have focal length and optical zoom capabilities.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker for outputting audio signals.

The I/O interface 312 provides an interface between the processing component 302 and peripheral interface modules, such as a keyboard, a click wheel, buttons, and the like. The buttons may include but are not limited to: home button, volume button, start button, and lock button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of a target object contact with the device 300, an orientation or an acceleration/deceleration of the device 300, and a change in temperature of the device 300. The sensor assembly 314 may include a proximity sensor configured to detect the presence of nearby objects without any physical contact. The sensor component 314 may also include a light sensor, such as a CMOS or CCD image sensor, applicable for imaging applications. In some embodiments, the sensor component 314 may also include an acceleration sensor, a gyroscope sensor, a magnetic sensor, a pressure sensor or a temperature sensor.

The communication component 316 is configured to facilitate communication, wired or wirelessly, between the device 300 and other devices. The device 300 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 316 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

In exemplary embodiments, there is also provided a non-transitory computer readable storage medium such as a memory 304 storing instructions, which may be executed by a processor 320 of the device 300 to implement the method mentioned above. For example, the non-transitory readable storage medium may be a ROM, a RAM, a CD-ROM, a magnetic tape, a floppy disc, an optical data storage device, and the like.

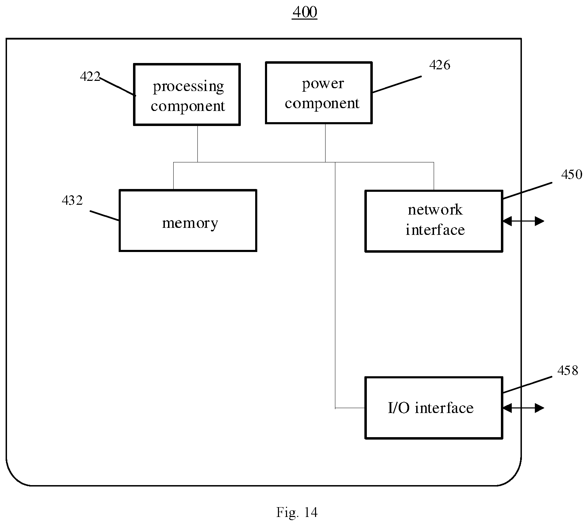

Fig. 14 is a block diagram of a device 400 for carrier determining according to an exemplary embodiment. For example, the device 400 may be provided as a server. Referring to Fig. 14, the device 400 includes a processing component 422 and memory resource represented by a memory 432. The processing component 422 further includes one or more processor. The memory 432 is configured to store instructions executable by the processing component 422, for example, application programs. The application programs stored in the memory 432 may include one or more module each corresponding to a set of instructions. Furthermore, the processing component 422 is configured to execute the instructions, for performing the above method.

The device 400 may further include a power component 426 configured to perform power management of the device 400, a wired or wireless network interface 450 configured to connect the device 400 to network, and an input/output (I/O) interface 458. The device 400 may perform based on the operating system stored in the memory 432, for example, Windows ServerTM, Mac OS XTM, UnixTM, LinuxTM, FreeBSDTM or the like.

It can be further understood that in this disclosure, "multiple" refers to two or more, similar to other quantifiers. "and/or" describes the association relationship of the associated object, indicating that there can be three types of relationships. For example, A and/or B can represent: the existence of A alone, the coexistence of A and B, and the existence of B alone. The character "/" generally indicates that the associated object is an OR relationship. The singular forms of "a", "said", and "the" are also intended to include the majority form, unless the context clearly indicates other meanings.

It can be further understood that the terms "first", "second", etc. are used to describe various information, but this information should not be limited to these terms. These terms are only used to distinguish information of the same type from each other and do not indicate a specific order or importance. In fact, expressions such as "first" and "second" can be used interchangeably. For example, without departing from the scope of this disclosure, the first information can also be referred to as the second information, and similarly, the second information can also be referred to as the first information.

It can be further understood that although the operations are described in a specific order in the drawings in embodiments of the present disclosure, it should not be understood as requiring the execution of these operations in a specific or serial order as shown, or requiring the execution of all shown operations to achieve the desired result. In specific environments, multitasking and parallel processing may be advantageous.

After considering the specification and practicing the disclosure disclosed herein, those skilled in the art will easily think of other embodiments of the present disclosure. This disclosure is intended to cover any variations, purposes, or adaptive changes of the present disclosure. These variations, purposes, or adaptive changes follow general principles of the present disclosure and include common knowledge or conventional technical means in the technical field not disclosed in the present disclosure. The description and the embodiments are only regarded as exemplary, and the true scope and spirit of the present disclosure are pointed out by the following claims.

It should be understood that the present disclosure is not limited to the precise structure that has been described above and illustrated in the drawings, and various modifications and changes can be made without departing from its scope. The scope of the present disclosure is only limited by the appended claims.

## Claims

1. A carrier determining method, applied to a terminal, the method comprising:
determining terminal information of the terminal, and determining a first threshold value corresponding to the terminal information; and
determining a carrier for initiating data transmission based on the first threshold value.

2. The carrier determining method of claim 1, wherein different terminal information corresponds to different first threshold values.

3. The carrier determining method of claim 1, wherein determining the first threshold value corresponding to the terminal information comprises:
determining a candidate threshold value and/or a first offset value based on a received first indication signaling or communication protocol;
determining the candidate threshold value as the first threshold value corresponding to the terminal information, or determining the first threshold value corresponding to the terminal information based on the candidate threshold value and the first offset value, according to the terminal information.

4. The carrier determining method of claim 1, wherein determining the first threshold value corresponding to the terminal information comprises:
determining a second threshold value and a second offset value according to a received first indication signaling or communication protocol, wherein the second threshold value is used to determine whether to initiate a retransmission request; and
determining the first threshold value corresponding to the terminal information based on the second threshold value and the second offset value,
wherein different terminal information corresponds to different second offset values.

5. The carrier determining method of any of claims 1-4, wherein the terminal information comprises one or more of a terminal type, a terminal function or a terminal channel state.

6. The carrier determining method of claim 5, wherein the terminal type comprises a first terminal type or a second terminal type, the first terminal type is a terminal type with coverage enhancement capability, and the second terminal type is a terminal type without coverage enhancement capability;
the first threshold value corresponding to the first terminal type is less than the first threshold value corresponding to the second terminal type.

7. The carrier determining method of claim 1, further comprising:
determining a second threshold value based on a received second indication signaling or communication protocol, wherein the second threshold value is used to determine whether to initiate a retransmission request,
wherein different second threshold values correspond to different carriers.

8. The carrier determining method of claim 7, wherein the second indication signaling or communication protocol further comprises a third offset value or a fourth offset value;
the second threshold value is determined based on the first threshold value and the third offset value; or
the second threshold value is determined based on the first threshold value and the fourth offset value;
the third offset value and the fourth offset value correspond to different carriers.

9. The carrier determining method of claim 7, further comprising:
determining that the second threshold value is greater than or equal to the first threshold value, in response to the second threshold value being corresponding to a primary carrier;
or
determining that the second threshold value is less than or equal to the first threshold value, in response to the second threshold value being corresponding to a secondary carrier.

10. The carrier determining method of claim 1, wherein determining the carrier for data transmission based on the first threshold value comprises:
determining using a primary carrier to initiate random access, in response to a determined measurement value being greater than or equal to the first threshold value; or
determining using a secondary carrier to initiate random access, in response to a determined measurement value being less than or equal to the first threshold value.

11. The carrier determining method of claim 6, further comprising:
determining a channel measurement value and the carrier for data transmission;
initiating a retransmission request based on the carrier, in response to the channel measurement value being less than the second threshold value corresponding to the carrier.

12. A carrier determining method, applied to a network device, comprising:
determining a first threshold value, wherein the first threshold value is used for a terminal to determine a carrier for initiating data transmission according to terminal information; and
sending a first indication signaling, the first indication signaling comprising at least one first threshold value.

13. The carrier determining method of claim 12, wherein there are a plurality of first threshold values;
different first threshold values correspond to different terminal information.

14. The carrier determining method of claim 12, wherein the first indication signaling further comprises a first offset value;
the first threshold value corresponds to one of different terminal information;
the terminal information corresponding to the first offset value is different from the terminal information corresponding to the first threshold value.

15. The carrier determining method of claim 12, wherein the first indication signaling further comprises a second threshold value and a second offset value;
the second threshold value is used to determine whether to initiate a retransmission request;
different second offset values correspond to different terminal information.

16. The carrier determining method of any of claims 12-15, wherein the terminal information comprises one or more of a terminal type, a terminal function, or a terminal channel state.

17. The carrier determining method of claim 16, wherein the terminal type comprises a first terminal type or a second terminal type, the first terminal type is a terminal type with coverage enhancement capability, the second terminal type is a terminal type without coverage enhancement capability;
the first threshold value corresponding to the first terminal type is less than the first threshold value corresponding to the second terminal type.

18. The carrier determining method of claim 12, further comprising:
sending a second indication signaling, wherein the second indication signaling comprises a second threshold value, and the second threshold value is used to determine whether to initiate a retransmission request;
different second threshold values correspond to differ carriers.

19. The carrier determining method of claim 18, wherein the second indication signaling or communication protocol further comprises a third offset value and/or a fourth offset value;
the first threshold value and the third offset value are used for the terminal to determine the second threshold value; or
the first threshold value and the fourth offset value are used for the terminal to determine the second threshold value;
the third offset value and the fourth offset value correspond to different carriers.

20. The carrier determining method of claim 18, further comprising:
determining that the second threshold value is greater than or equal to the first threshold value, in response to the second threshold value being corresponding to a primary carrier;
or
determining that the second threshold value is less than or equal to the first threshold value, in response to the second threshold value being corresponding to a secondary carrier.

21. A carrier determining apparatus, applied to a terminal, the apparatus comprising:
a determining module, configured to determine terminal information of the terminal, and determine a first threshold value corresponding to the terminal information; and determine a carrier for initiating data transmission based on the first threshold value.

22. A carrier determining apparatus, applied to a network device, the apparatus comprising:
a determining module, configured to determine a first threshold value, wherein the first threshold value is used for a terminal to determine a carrier for initiating data transmission according to terminal information; and
a sending module, configured to send a first indication signaling, the first indication signaling comprising at least one first threshold value.

23. A carrier determining apparatus, comprising:
a processor; and
a memory, configured to store instructions executable by the processor,
wherein the processor is configured to implement the carrier determining method of any of claims 1-11, or implement the carrier determining method of any of claims 12-20.

24. A non-transitory computer readable storage medium that, when instructions in the storage medium are executed by a processor of a mobile terminal, enables the mobile terminal to implement the carrier determining method of any of claims 1-11, or enables the mobile terminal to implement the carrier determining method of any of claims 12-20.
